# EUROPÄISCHE PATENTSCHRIFT

(11) **EP 2 790 842 B1**
(45) Veröffentlichungstag und Bekanntmachung des Hinweises auf die Patenterteilung: **07.06.2017**
(21) Anmeldenummer: 12780499.5
(22) Anmeldetag: 02.11.2012
(51) Int. Cl.: B05D 1/30, B05D 7/02, B29C 45/00, G02B 1/10

(54) **POLYMERES WERKSTÜCK ZUR FLUTBESCHICHTUNG**
POLYMER WORKPIECE FOR FLOW COVER
PIÈCE USINÉE POLYMÈRE POUR LE REVÊTEMENT DE CANAL

(30) Priorität: 14.12.2011 EP 11193449
(43) Veröffentlichungstag der Anmeldung: 22.10.2014
(73) Patentinhaber: Saint-Gobain Glass France, 92400 Courbevoie (FR)
(72) Erfinder: FLEISCHMANN, Wolfgang, 71397 Leutenbach (DE); GULDAN, Marcus, 73066 Uhingen (DE); GÜLDNER, Dominic, 73760 Ostfiltern (DE); LUX, Thomas, 71554 Weissach im Tal (DE)
(74) Vertreter: Lendvai, Tomas
(86) Internationale Anmeldenummer: PCT/EP2012/071712
(87) Internationale Veröffentlichungsnummer: WO 2013/087290

(56) Entgegenhaltungen:
- EP-A1- 2 394 747
- WO-A1-2008/134768

## Beschreibung

Die Erfindung betrifft ein polymeres Werkstück zur Flutbeschichtung, ein Verfahren zur Herstellung eines beschichteten polymeren Werkstücks und dessen Verwendung.

Polymere Werkstücke werden häufig mit einer Beschichtung oder Lackierung versehen. Dadurch kann zum Einen das optische Aussehen wie Farbe oder Glanz des polymeren Werkstücks beeinflusst werden. Zum Anderen kann das polymere Werkstück durch eine Beschichtung vor chemischer und mechanischer Beschädigung sowie vor UV-Strahlung geschützt werden. Solche Schutzbeschichtungen sind insbesondere für polymere Werkstücke notwendig, die starken Beanspruchungen durch Umwelteinflüsse ausgesetzt sind und die gleichzeitig hohen Qualitätsanforderungen etwa hinsichtlich der Oberflächenbeschaffenheit und Transparenz genügen müssen. Dies trifft beispielsweise auf polymere Verscheibungen für Kraftfahrzeuge zu.

Ein geläufiges Verfahren zur Beschichtung von polymeren Werkstücken in großen Stückzahlen ist die Flutbeschichtung. Dabei wird das Werkstück von der Oberkante an mit einer Beschichtungslösung beaufschlagt, beispielsweise mittels einer oder mehrerer fest montierter Flutdüsen, eines Lackvorhangs oder eines beweglichen Flutroboterarms. Die ablaufende Beschichtungslösung benetzt dabei das Werkstück. Verfahren zur Flutbeschichtung sind beispielsweise aus GB 1,097,461 A, GB 1,201,292 A, GB 2,123,841 A und WO 2008/134768 A1 bekannt.

Ein Nachteil der Flutbeschichtung ergibt sich aus der Fließdynamik der Beschichtungslösung im Anflutbereich und in daran angrenzenden Bereichen des Werkstücks. Es werden häufig Verlaufsstörungen der Beschichtung beobachtet, die sich beispielsweise als ungenügende Schichtdicke, Lackläufer, Gardinenbildung oder Sägezahnerscheinungen zeigen.

Eine Aufgabe der vorliegenden Erfindung ist es, ein polymeres Werkstück bereitzustellen, bei welchem Verlaufstörungen im Anflutbereich bei der Flutbeschichtung vermieden werden. Eine weitere Aufgabe der vorliegenden Erfindung ist es, ein Verfahren zur Herstellung eines beschichteten polymeren Werkstücks bereitzustellen, bei welchem Verlaufstörungen im Anflutbereich des Werkstücks vermieden werden.

Die Aufgabe der vorliegenden Erfindung wird erfindungsgemäß durch ein polymeres Werkstück gelöst, zumindest umfassend eine obere Hauptfläche, eine untere Hauptfläche, eine Spritzgusswerkzeug-Trennfläche und eine Anflutkantenfläche, wobei die Anflutkantenfläche im Bereich zwischen der Spritzgusswerkzeug-Trennfläche und der unteren Hauptfläche als plane Fläche mit einem Winkel zur Spritzgusswerkzeug-Trennfläche von 20° bis 70° ausgeformt ist und dabei um einen Betrag von 0,0 mm bis 0,5 mm von der planen Fläche abweichen darf.

Die obere Hauptfläche des polymeren Werkstücks ist dafür vorgesehen, mittels Flutbeschichtung mit einer Beschichtung versehen zu werden. Besondere Einsatzbereiche für das fertige polymere Werkstück, wie beispielsweise die Verwendung als Dach-, Heck- oder Seitenverscheibung für Kraftfahrzeuge, können es erforderlich machen, das polymere Werkstück zusätzlich auch auf der unteren Hauptfläche zu beschichten.

Zur erfindungsgemäßen Flutbeschichtung eignen sich insbesondere scheibenförmige oder plattenförmige polymere Werkstücke, beispielsweise Kunststoffscheiben oder Kunststoffabdeckungen.

Mit Anflutkantenfläche wird im Sinne der Erfindung diejenige Kantenfläche des polymeren Werkstücks bezeichnet, die dafür vorgesehen ist, während der Flutbeschichtung des polymeren Werkstücks nach oben zu weisen. Das polymere Werkstück ist dabei in einem Winkel von 25° bis 85° zur Horizontalen angeordnet, wobei die untere Hauptfläche dem Boden zugewandt ist. Das polymere Werkstück wird von der Anflutkantenfläche an mit der Beschichtungslösung beflutet. Durch Verdampfen des Lösungsmittels der Beschichtungslösung wird die obere Hauptfläche mit einer Beschichtung versehen.

Nach dem Stand der Technik sind die Kantenflächen eines polymeren Werkstücks abgerundet ausgeformt. Die Kantenflächen können beispielsweise im Querschnitt einen Kreisbogen bilden, insbesondere einen Halbkreis, dessen Durchmesser der Dicke des polymeren Bauteils entspricht. Es können aber auch komplexere Kantenverrundungen auftreten, wobei der Krümmungsradius vom Abstand zu den Hauptflächen des polymeren Werkstücks abhängig ist. Es treten jedoch nach dem Stand der Technik keine abrupten Änderungen der Krümmung in Form "scharfer" Übergänge innerhalb der Kantenflächen auf.

Es hat sich überraschend gezeigt, dass die erfindungsgemäße Ausgestaltung der Anflutkantenfläche zu einem deutlich verbesserten Verlauf der Beschichtung auf der oberen Hauptfläche des polymeren Werkstücks führt. Durch den erfindungsgemäß ausgestalteten Bereich der Anflutkantenfläche zwischen der Spritzgusswerkzeug-Trennfläche und der unteren Hauptfläche, der im Vergleich zum Stand der Technik als Abfasung aufgefasst werden kann, wird die Beschichtungslösung verstärkt über die Anflutkantenfläche in Richtung der unteren Hauptfläche geleitet. Die Beschichtungslösung kann so nicht vermehrt auf die obere Hauptfläche fließen. Verlaufstörungen der Beschichtung, beispielsweise Lackläufer können dadurch überraschend vermindert oder sogar ganz vermieden werden.

Das polymere Werkstück wird erfindungsgemäß bevorzugt in einem Ein- oder Mehrkomponenten-Spritzgussverfahren oder Ein- oder Mehrkomponenten-Spritzprägeverfahren, besonders bevorzugt in Kombination mit Wendeplattentechnologie, bereitgestellt. Dabei werden ein oberes und ein unteres Spritzgusswerkzeug schlüssig gegeneinander geführt. Durch die beiden Spritzgusswerkzeuge wird eine Kavität ausgebildet. In die Kavität wird das aufgeschmolzene polymere Material eingespritzt. Nach Aushärten des polymeren Materials kann das polymere Werkstück den Spritzgusswerkzeugen entnommen werden. In einer bevorzugten Ausführung wird vor der Entnahme des polymeren Werkstücks in einem zusätzlichen Schritt eine weitere, meist dunkel eingefärbte, opake Komponente an das Werkstück angespritzt. Die Form des polymeren Werkstücks entspricht der Form der von den Spritzgusswerkzeugen gebildeten Kavität.

Der Begriff Spritzgusswerkzeug schließt im Sinne der Erfindung auch Werkzeuge zum Spritzprägen und anderer Spritzgusssonderverfahren ein.

Das polymere Werkstück kann plan oder leicht oder stark in einer Richtung oder in mehreren Richtungen des Raumes gebogen sein.

Die obere Hauptfläche ist bevorzugt glatt ausgeführt. Mit glatt wird dabei eine Fläche bezeichnet, die keine räumlich begrenzten Erhebungen und / oder Vertiefungen aufweist. Die untere Hauptfläche kann ebenfalls glatt ausgeführt sein, kann aber auch eine komplexe Form aufweisen. Beispielsweise können Formelemente im Bereich der unteren Hauptfläche spritzgegossen sein, die der Fixierung oder Positionierung des polymeren Werkstücks am Ort seiner Verwendung dienen, beispielsweise als opake Komponente des polymeren Werkstücks. Die untere Hauptfläche weist jedoch bevorzugt zumindest einen glatten Bereich auf, der an die Anflutkantenfläche angrenzt. Die glatte obere Hauptfläche und der glatte Bereich der unteren Hauptfläche sind bevorzugt parallel zueinander ausgeführt. Der Abstand zwischen der glatten oberen Hauptfläche und dem glatten Bereich der unteren Hauptfläche angrenzend an die Anflutkantenfläche wird im Sinne der Erfindung als Dicke d des polymeren Werkstücks angrenzend an die Anflutkantenfläche bezeichnet.

Die Fläche, die beim Spritzguss des polymeren Werkstücks von der Grenzlinie zwischen den beiden Spritzgusswerkzeugen aufgespannt wird, wird im Sinne der Erfindung als Spritzgusswerkzeug-Trennfläche bezeichnet. Die Spritzgusswerkzeug-Trennfläche ist bevorzugt parallel zur oberen Hauptfläche des polymeren Werkstücks angeordnet. Ist die obere Hauptfläche gebogen ausgeformt, so ist auch die Spritzgusswerkzeug-Trennfläche gebogen ausgeformt. Der Abstand der Spritzgusswerkzeug-Trennfläche von der oberen Hauptfläche beträgt bevorzugt von 20 % bis 80 %, besonders bevorzugt von 33 % bis 67 % der Dicke d des polymeren Werkstücks angrenzend an die Anflutkantenfläche. Damit werden besonders gute Ergebnisse hinsichtlich des Beschichtungsverlaufs erzielt.

In einer vorteilhaften Ausgestaltung der Erfindung ist der Bereich der Anflutkantenfläche zwischen der Spritzgusswerkzeug-Trennfläche und der unteren Hauptfläche als plane Fläche ausgeformt. Der Winkel zwischen der planen Fläche und der Spritzgusswerkzeug-Trennfläche beträgt erfindungsgemäß von 20° bis 70°. Im Falle einer gebogenen Spritzgusswerkzeug-Trennfläche muss zur Bestimmung des Winkels die Tangentialfläche an die Spritzgusswerkzeug-Trennfläche an der Schnittlinie zwischen Spritzgusswerkzeug-Trennfläche und Anflutkantenfläche herangezogen werden.

Der Winkel zwischen der planen Fläche und der Spritzgusswerkzeug-Trennfläche beträgt bevorzugt von 30° bis 60°, besonders bevorzugt von 35° bis 55°. Damit werden besonders gute Ergebnisse hinsichtlich des Beschichtungsverlaufs auf der oberen Hauptfläche des polymeren Werkstücks erzielt.

Der Bereich der Anflutkantenfläche zwischen der Spritzgusswerkzeug-Trennfläche und der unteren Hauptfläche kann in einer alternativen vorteilhaften Ausgestaltung der Erfindung aber auch leicht von einer idealen planen Fläche abweichen und leicht gekrümmt ausgeformt sein. Die Anflutkantenfläche ist dabei bevorzugt konvex ausgeführt. Konvex bedeutet, dass die Krümmungsrichtung der Anflutkantenfläche zum polymeren Werkstück hingewandt ist. Der Bereich der Anflutkantenfläche zwischen der Spritzgusswerkzeug-Trennfläche und der unteren Hauptfläche ist also nach außen gewölbt. An den Bereich der Anflutkantenfläche zwischen der Spritzgusswerkzeug-Trennfläche und der unteren Hauptfläche kann aber erfindungsgemäß eine plane Fläche mit einem Winkel zur Spritzgusswerkzeug-Trennfläche von 20° bis 70°, bevorzugt von 30° bis 60°, besonders bevorzugt von 35° bis 55° angepasst werden, so dass jeder Punkt auf der Anflutkantenfläche zwischen der Spritzgusswerkzeug-Trennfläche und der unteren Hauptfläche einen lotrechten Abstand von höchstens 0,5 mm zur angepassten planen Fläche aufweist. Der Bereich der Anflutkantenfläche zwischen der Spritzgusswerkzeug-Trennfläche und der unteren Hauptfläche weicht dann im Sinne der Erfindung um einen Betrag von 0,0 mm bis 0,5 mm von der angepassten planen Fläche ab. Das bedeutet, dass der maximale Abstand der Anflutkantenfläche im Bereich zwischen Spritzgusswerkzeug-Trennfläche und unterer Hauptfläche zur angepassten planen Fläche von 0,0 mm bis 0,5 mm beträgt. Der Bereich der Anflutkantenfläche zwischen der Spritzgusswerkzeug-Trennfläche und der unteren Hauptfläche weicht bevorzugt um einen Betrag von 0,0 mm bis 0,3 mm, besonders bevorzugt von 0,0 mm bis 0,2 mm von der angepassten planen Fläche ab. Damit werden besonders gute Ergebnisse hinsichtlich des Beschichtungsverlaufs erzielt. Der maximale Abstand der Anflutkantenfläche im Bereich zwischen Spritzgusswerkzeug-Trennfläche und unterer Hauptfläche zur angepassten planen Fläche ist bevorzugt in der Mitte des Bereichs der Anflutkantenfläche zwischen Spritzgusswerkzeug-Trennfläche und unterer Hauptfläche angeordnet.

Das erfindungsgemäße polymere Werkstück umfasst zumindest eine obere Hauptfläche, eine untere Hauptfläche, eine Spritzgusswerkzeug-Trennfläche und eine Anflutkantenfläche, wobei die Anflutkantenfläche im Bereich zwischen der Spritzgusswerkzeug-Trennfläche und der unteren Hauptfläche um einen Betrag von 0,0 mm bis 0,5 mm von einer planen Fläche mit einem Winkel zur Spritzgusswerkzeug-Trennfläche von 20° bis 70° abweicht. Beträgt die Abweichung 0,0 mm, so ist die Anflutkantenfläche im Bereich zwischen der Spritzgusswerkzeug-Trennfläche und der unteren Hauptfläche als plane Fläche ausgeformt, wobei der Winkel der planen Fläche zur Spritzgusswerkzeug-Trennfläche von 20° bis 70° beträgt. Der Bereich der Anflutkantenfläche zwischen der Spritzgusswerkzeug-Trennfläche und der unteren Hauptfläche kann aber auch leicht von einer idealen planen Fläche abweichen und leicht gekrümmt ausgeformt sein. Die erfindungsgemäße Abweichung von einer angepassten planen Fläche, welche einen Winkel zur Spritzgusswerkzeug-Trennfläche von 20° bis 70° aufweist, beträgt kleiner oder gleich 0,5 mm, bevorzugt kleiner oder gleich 0,3 mm und besonders bevorzugt kleiner oder gleich 0,2 mm. Jeder Punkt auf der Anflutkantenfläche zwischen der Spritzgusswerkzeug-Trennfläche und der unteren Hauptfläche weist also einen lotrechten Abstand von höchstens 0,5 mm zur angepassten planen Fläche auf.

Im Übergangsbereich zur unteren Hauptfläche kann die Anflutkantenfläche herstellungsbedingt eine Krümmung aufweisen. Der Übergangsbereich erstreckt sich bevorzugt höchstens über 10 %, besonders bevorzugt höchstens über 5 % der Dicke d des polymeren Werkstücks angrenzend an die Anflutkantenfläche. Das erfindungsgemäße Merkmal der Anflutkantenfläche gilt auch in Anwesenheit einer solchen Krümmung als erfüllt. Ist der Bereich der Anflutkantenfläche zwischen Spritzgusswerkzeug-Trennfläche und der unteren Hauptfläche erfindungsgemäß leicht gekrümmt ausgeführt, so ist beim Anpassen einer planen Fläche zur Beurteilung der erfindungsgemäßen Merkmale eine solche Krümmung im Übergangsbereich auszunehmen.

Die neben der Anflutkantenfläche weiteren Kantenflächen des polymeren Werkstücks können wie die Anflutkantenfläche gestaltet sein. Sie können aber auch auf herkömmliche Weise gestaltet sein.

Der Bereich der Anflutkantenfläche zwischen der Spritzgusswerkzeug-Trennfläche und der oberen Hauptfläche ist konvex gekrümmt ausgeformt. Es kann dabei ein einheitlicher Krümmungsradius vorliegen, der Krümmungsradius kann sich aber auch mit wachsendem Abstand zur oberen Hauptfläche ändern. Im Bereich zwischen der Spritzgusswerkzeug-Trennfläche und der oberen Hauptfläche ist die Anflutkantenfläche gemäß dem Stand der Technik ausgeformt. Insbesondere ist die Anflutkantenfläche im Bereich zwischen oberer Hauptfläche und Spritzgusswerkzeug-Trennfläche deutlich stärker gekrümmt als im Bereich zwischen Spritzgusswerkzeug-Trennfläche und unterer Hauptfläche.

Die erfindungsgemäße Gestaltung des Bereichs der Anflutkantenfläche zwischen der Spritzgusswerkzeug-Trennfläche und der unteren Hauptfläche wird bevorzugt beim Spritzgießen beziehungsweise Spritzprägen des polymeren Werkstücks eingebracht. Dies kann beispielsweise durch die Gestaltung des Spritzgusswerkzeugs erreicht werden. Es kann aber auch zunächst ein polymeres Werkstück mit herkömmlicher Kantengestaltung spritzgegossen oder spritzgeprägt werden und die Anflutkante anschließend erfindungsgemäß umgestalten werden, beispielsweise durch Fräsen, Schleifen, Feilen oder Schneiden.

Die Dicke d des polymeren Werkstücks angrenzend an die Anflutkantenfläche beträgt bevorzugt von 1 mm bis 10 mm, besonders bevorzugt von 2 mm bis 7 mm. Das ist besonders vorteilhaft im Hinblick auf die Festigkeit und die Verarbeitung des polymeren Werkstücks. Der Flächeninhalt der oberen Hauptfläche beträgt beispielsweise von 0,05 m² bis 1,7 m².

Das polymere Werkstück enthält bevorzugt zumindest Polyethylen (PE), Polycarbonate (PC), Polypropylen (PP), Polystyrol, Polybutadien, Polynitrile, Polyester, Polyurethane, Polymethylmethacrylate, Polyacrylate, Polyester, Polyamide, Polyethylenterephthalat, Acrylnitril-Butadien-Styrol (ABS), Styrol-Acrylnitril (SAN), Acrylester-Styrol-Acrylnitril (ASA), Acrylnitril-Butadien-Styrol - Polycarbonat (ABS/PC) und / oder Copolymere oder Gemische davon. Das polymere Werkstück enthält besonders bevorzugt Polycarbonate (PC), Polyethylenterephthalat (PET) und / oder Polymethylmethacrylat (PMMA). Das ist besonders vorteilhaft im Hinblick auf die Verarbeitung, die Festigkeit, die Witterungsbeständigkeit und die chemische Beständigkeit des polymeren Werkstücks.

Eine opake Komponente des polymeren Werkstücks enthält weiter bevorzugt zumindest ein Farbmittel. Durch das Farbmittel wird die Opazität der Komponente erreicht. Das Farbmittel kann anorganische und / oder organische Farbstoffe und / oder Pigmente enthalten. Das Farbmittel kann bunt oder unbunt sein. Geeignete Farbmittel sind dem Fachmann bekannt und können beispielsweise im Colour Index der British Society of Dyers and Colourists und der American Association of Textile Chemists and Colorists nachgeschlagen werden. Bevorzugt wird ein Schwarz-Pigment als Farbmittel verwendet, beispielsweise Pigmentruß (Carbon Black), Anilinschwarz, Beinschwarz, Eisenoxidschwarz, Spinellschwarz und / oder Graphit. Dadurch wird eine schwarze opake Komponente erreicht.

In einer vorteilhaften Ausgestaltung der Erfindung weist die Anflutkantenfläche einen der unteren Hauptfläche zugewandten Bereich mit einer Länge von 0,005 mm bis 0,1 mm, bevorzugt von 0,01 mm bis 0,05 mm auf, der entlang der Spritzgusswerkzeug-Trennfläche verläuft. Durch die Kombination des erfindungsgemäß gestalteten Bereichs der Anflutkantenfläche zwischen Spritzgusswerkzeug-Trennfläche und unterer Hauptfläche mit dem entlang der Spritzgusswerkzeug-Trennfläche verlaufenden Bereich wird ein Teil der Beschichtungslösung besonders wirksam über die Anflutkantenfläche in Richtung der unteren Hauptfläche geleitet. Das ist besonders vorteilhaft im Hinblick auf die Vermeidung von Verlaufstörungen der Beschichtung.

Die Aufgabe der vorliegenden Erfindung wird weiter erfindungsgemäß durch ein polymeres Werkstück gelöst, zumindest umfassend eine obere Hauptfläche, eine untere Hauptfläche, eine Spritzgusswerkzeug-Trennfläche und eine Anflutkantenfläche, wobei ein der unteren Hauptfläche zugewandter Bereich der Anflutkantenfläche mit einer Länge von 0,005 mm bis 0,1 mm entlang der Spritzgusswerkzeug-Trennfläche verläuft.

Es hat sich überraschend gezeigt, dass die erfindungsgemäße Ausgestaltung der Anflutkantenfläche zu einem deutlich verbesserten Verlauf der Beschichtung auf der oberen Hauptfläche des polymeren Werkstücks führt. Durch den entlang der Spritzgusswerkzeug-Trennfläche verlaufenden Bereich weist die Anflutkantenfläche im Vergleich zum Stand der Technik einen Versatz auf. Aufgrund dieses Versatzes wird die Beschichtungslösung verstärkt über die Anflutkantenfläche in Richtung der unteren Hauptfläche geleitet. Die Beschichtungslösung kann so nicht vermehrt auf die obere Hauptfläche fließen. Verlaufstörungen der Beschichtung können dadurch überraschend vermindert oder sogar ganz vermieden werden.

Der Bereich der Anflutkantenfläche, der entlang der Spritzgusswerkzeug-Trennfläche verläuft, weist bevorzugt eine Länge von 0,01 mm bis 0,05 mm auf. Damit werden besonders gute Ergebnisse hinsichtlich des Beschichtungsverlaufs auf der oberen Hauptfläche des polymeren Werkstücks erzielt.

Die neben der Anflutkantenfläche weiteren Kantenflächen des polymeren Werkstücks können wie die Anflutkantenfläche gestaltet sein. Sie können aber auch auf herkömmliche Weise gestaltet sein.

Der Bereich der Anflutkantenfläche zwischen der Spritzgusswerkzeug-Trennfläche und der oberen Hauptfläche ist konvex gekrümmt ausgeformt. Es kann dabei ein einheitlicher Krümmungsradius vorliegen, der Krümmungsradius kann sich aber auch mit wachsendem Abstand zur oberen Hauptfläche ändern. Im Bereich zwischen der Spritzgusswerkzeug-Trennfläche und der oberen Hauptfläche ist die Anflutkantenfläche gemäß dem Stand der Technik ausgeformt.

Der Bereich der Anflutkantenfläche zwischen der Spritzgusswerkzeug-Trennfläche und der unteren Hauptfläche kann ebenfalls konvex gekrümmt ausgeformt sein. Es kann dabei ein einheitlicher Krümmungsradius vorliegen, der Krümmungsradius kann sich aber auch mit wachsendem Abstand zur unteren Hauptfläche ändern. Im Bereich zwischen der Spritzgusswerkzeug-Trennfläche und der unteren Hauptfläche kann die Anflutkantenfläche also ebenfalls gemäß dem Stand der Technik ausgeformt sein.

In einer bevorzugten Ausgestaltung der Erfindung ist der Bereich der Anflutkantenfläche zwischen der Spritzgusswerkzeug-Trennfläche und der unteren Hauptfläche als plane Fläche mit einem Winkel zur Spritzgusswerkzeug-Trennfläche von 20° bis 70°, bevorzugt von 30° bis 60°, besonders bevorzugt von 35° bis 55° ausgeformt Dabei darf der Bereich der Anflutkantenfläche zwischen der Spritzgusswerkzeug-Trennfläche und der unteren Hauptfläche um einen Betrag von 0,0 mm bis 0,5 mm, bevorzugt von 0,0 mm bis 0,3 mm, besonders bevorzugt von 0,0 mm bis 0,2 mm von der planen Fläche abweichen. Durch die Kombination des erfindungsgemäßen Bereichs der Anflutkantenfläche entlang der Spritzgusswerkzeug-Trennfläche mit dem Bereich der Anflutkantenfläche zwischen Spritzgusswerkzeug-Trennfläche und unterer Hauptfläche, der plan oder nur leicht gekrümmt ausgeführt ist, wird ein Teil der Beschichtungslösung besonders wirksam über die Anflutkantenfläche in Richtung der unteren Hauptfläche geleitet. Das ist besonders vorteilhaft im Hinblick auf die Vermeidung von Verlaufstörungen der Beschichtung.

Der erfindungsgemäße entlang der Spritzgusswerkzeug-Trennfläche verlaufende Bereich der Anflutkantenfläche wird bevorzugt beim Spritzgießen beziehungsweise Spritzprägen des polymeren Werkstücks eingebracht. Dies kann beispielsweise durch die Gestaltung des Spritzgusswerkzeugs erreicht werden.

Der entlang der Spritzgusswerkzeug-Trennfläche verlaufende Bereich kann alternativ durch versetztes Gegeneinanderführen des oberen und unteren Spritzgusswerkzeugs in die Anflutkantenfläche eingebracht werden. In diesem Fall wird in die der Anflutkantenfläche gegenüberliegenden Kantenfläche ein gegensätzlicher Versatz eingebracht.

Der entlang der Spritzgusswerkzeug-Trennfläche verlaufende Bereich kann alternativ durch eine unterschiedliche Temperierung der beiden Spritzgusswerkzeuge in die Anflutkantenfläche eingebracht werden. Die beiden Spritzgusswerkzeuge sind dabei so konstruiert, dass kein Versatz innerhalb der Anflutkantenfläche des polymeren Werkstücks erzeugt wird, wenn sie die gleiche Temperatur aufweisen. Eine unterschiedliche Temperierung führt zu einer unterschiedlichen thermischen Ausdehnung der beiden Spritzguss-Werkzeuge. Daraus ergibt sich der erfindungsgemäße Versatz entlang der Spritzgusswerkzeug-Trennfläche.

Es kann aber auch zunächst ein polymeres Werkstück mit herkömmlicher Kantengestaltung spritzgegossen oder spritzgeprägt werden und die Anflutkante anschließend erfindungsgemäß umgestalten werden, beispielsweise durch Fräsen, Schleifen, Feilen oder Schneiden.

Die Aufgabe der vorliegenden Erfindung wird weiter erfindungsgemäß durch ein Verfahren zur Herstellung eines beschichteten polymeren Werkstücks gelöst, wobei zumindest:
a) ein erfindungsgemäßes polymeres Werkstück bereitgestellt wird,
b) das polymere Werkstück mit nach oben weisender Anflutkantenfläche in einem Winkel zur Horizontalen von 25° bis 85° angeordnet wird, wobei die untere Hauptfläche dem Boden zugewandt wird, und
c) das polymere Werkstück von der Anflutkantenfläche an mit einer Beschichtungslösung beflutet wird.

Das erfindungsgemäße polymere Werkstück wird in Verfahrensschritt (a) bevorzugt durch Ein- oder Mehrkomponenten-Spritzguss oder durch Ein- oder Mehrkomponenten-Spritzprägen bereitgestellt.

In der Beschichtungslösung liegt das Material, das die Beschichtung auf dem polymeren Werkstück bilden soll, in einer als Lösungsmittel bezeichneten Flüssigkeit vor. Der Begriff Beschichtungslösung im Sinne der Erfindung ist nicht auf Lösungen im engeren Sinne beschränkt, sondern schließt beispielsweise auch Dispersionen, Suspensionen und Emulsionen ein.

Die Beschichtungslösung trifft zumindest auf die Anflutkantenfläche. Die Beschichtungslösung kann zudem aber auch auf einen Bereich der oberen Hauptfläche, der an die Anflutkantenfläche grenzt, treffen.

Die Beschichtungslösung fließt aufgrund der Schwerkraft von der Anflutkantenfläche über das polymere Werkstück bis zur gegenüberliegenden Kante. Infolge der Verdampfung des Lösungsmittels der Beschichtungslösung wird die obere Hauptfläche des polymeren Werkstücks mit der Beschichtung versehen.

Durch die erfindungsgemäß gestaltete Anflutkantenfläche des polymeren Werkstücks führt die Flutbeschichtung zu einem deutlich verbesserten Beschichtungsverlauf im Vergleich zur Flutbeschichtung von herkömmlichen polymeren Werkstücken. Die erfindungsgemäße Gestaltung der Anflutkantenfläche bewirkt, dass die Beschichtungslösung verstärkt über die Anflutkantenfläche in Richtung der unteren Hauptfläche geleitet wird. Die Beschichtungslösung kann so nicht vermehrt auf die obere Hauptfläche fließen. Verlaufstörungen der Beschichtung können dadurch überraschend vermindert oder sogar ganz vermieden werden. Das ist ein großer Vorteil des erfindungsgemäßen Verfahrens.

In Abhängigkeit von der Größe und der geometrischen Form des zu beschichtenden Werkstücks kann die Beschichtungslösung beispielsweise aus einem Lackvorhang und / oder aus mehreren nebeneinander angeordneten Düsen auf das Werkstück fließen. Die Beschichtungslösung kann alternativ aus einem beweglichen Düsenarm auf das Werkstück aufgebracht werden. Dies ist insbesondere dann erforderlich, wenn der Verwendungszweck des Werkstücks eine zusätzliche Beschichtung des Werkstücks auf der unteren Hauptfläche erfordert.

Das polymere Werkstück wird bevorzugt mit einem Winkel von 35° bis 70°, besonders bevorzugt von 40° bis 60° zur Horizontalen angeordnet. Zum Anordnen des polymeren Werkstücks in einem definierten Winkel zur Horizontalen wird das polymere Werkstück bevorzugt in eine Halterung eingelegt. Die Halterung enthält bevorzugt Metalle und / oder Legierungen, besonders bevorzugt Eisen, Aluminium, Chrom, Vanadium, Nickel, Molybdän, Mangan oder Polymere wie Polyethylen, Polypropylen, Polystyrol, Polyurethane, Polycarbonate, Polymethylmetacrylate, Polyacrylate, Polyester, Polyamide und / oder Gemische oder Copolymere davon.

Das Lösungsmittel der Beschichtungslösung enthält bevorzugt zumindest Wasser, Alkohole, und / oder Ketone, besonders bevorzugt Methanol, 2-Propanol, n-Butanol, 1-Methoxy-2-propanol, 4-Hydroxy-4-methyl-2-pentanon, und / oder Gemische oder Derivate davon. Das Lösungsmittel enthält weiter bevorzugt 4-Methyl-2-pentanon (MIBK) und / oder Derivate davon.

Mit dem erfindungsgemäßen Verfahren wird bevorzugt eine Schutzbeschichtung auf das polymere Werkstück aufgebracht, welche das polymere Werkstück vor mechanischer und chemischer Beschädigung sowie UV-Strahlung schützt. Bevorzugt werden thermisch härtende oder UV-härtende Lacksysteme auf Basis von Polysiloxanen, Polyacrylaten, Polymethacrylaten und / oder Polyurethanen verwendet. Die Schutzbeschichtung hat bevorzugt eine Schichtdicke von 1 µm bis 50 µm, besonders bevorzugt von 2 µm bis 25 µm. Das ist besonders vorteilhaft im Hinblick auf die schützende Wirkung der Beschichtung.

Die Beschichtung kann neben farbgebenden Verbindungen und Pigmenten auch UV-Blocker, Konservierungsstoffe sowie Komponenten zur Erhöhung der Kratzfestigkeit, beispielsweise Nanopartikel enthalten.

Die Schutzbeschichtung wird nach dem Aufbringen bevorzugt über Temperatur und / oder UV-Licht-Eintrag ausgehärtet.

Als Schutzbeschichtung geeignete Produkte sind beispielsweise AS4000, AS4700, Varianten des PHC587 oder UVHC3000, die von der Firma Momentive bereitgestellt werden.

Durch wiederholtes Überfluten des polymeren Werkstücks können auch mehrere gleiche oder verschiedene Schichten aufgebracht werden. Das polymere Werkstück wird zwischen dem Auftragen verschiedener Schichten bevorzugt getrocknet.

Vor der Schutzbeschichtung wird bevorzugt eine haftvermittelnde Schicht auf das polymere Werkstück aufgebracht. Die haftvermittelnde Schicht kann beispielsweise Acrylate enthalten und eine Schichtdicke von 0,4 µm bis 5 µm aufweisen. Die Schutzbeschichtung kann beispielsweise Polysiloxane enthalten und eine Schichtdicke von 1 µm bis 15 µm aufweisen.

Das erfindungsgemäße Verfahren kann weitere Verfahrenschritte umfassen, beispielsweise eine bereichsweise Erwärmung des polymeren Werkstücks vor dem Aufbringen der Beschichtungslösung, bevorzugt in einem der Anflutkantenfläche benachbarten Bereich der oberen Hauptfläche, oder das Beaufschlagen der Beschichtungslösung mit einem Luftstrom, bevorzugt in einem der Anflutkantenfläche benachbarten Bereich der oberen Hauptfläche. Solche Maßnahmen erhöhen die Verdunstung des in der Beschichtungslösung befindlichen Lösungsmittels und erhöhen die Viskosität der Beschichtungslösung. Die erhöhte Viskosität verlangsamt das Abfließen der Beschichtungslösung im Bereich unterhalb der Anflutkantenfläche und gleicht die Schichtdicke der Beschichtung in der Nähe der Anflutkante an die Schichtdicke der Beschichtung in der Nähe der gegenüberliegenden Kante an. Das ist besonders vorteilhaft im Hinblick auf eine gleichmäßige Schichtdicke der Beschichtung.

Das polymere Werkstück wird bevorzugt als Scheibe, als Bestandteil einer Scheibe oder als Kunststoffabdeckung von Fortbewegungsmitteln für den Verkehr auf dem Lande, in der Luft oder zu Wasser verwendet, insbesondere als Heck-, Windschutz-, Seiten-, Dachscheibe, Leuchtenabdeckung, Zierleiste und / oder als Fahrzeugdach von Personenkraftwagen, Lastkraftwagen, Bussen, Straßenbahnen, U-Bahnen, Zügen und Motorrädern. Das polymere Werkstück kann auch in funktionalen und / oder dekorativen Einzelstücken oder als Einbauteil in Möbeln und Geräten verwendet werden.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:
- Fig. 1: einen Querschnitt durch ein polymeres Werkstück nach dem Stand der Technik,
- Fig. 2: einen Querschnitt durch eine erste Ausgestaltung des erfindungsgemäßen polymeren Werkstücks,
- Fig. 3: einen Querschnitt durch eine weitere Ausgestaltung des erfindungsgemäßen polymeren Werkstücks,
- Fig. 4: einen Querschnitt durch eine weitere Ausgestaltung des erfindungsgemäßen polymeren Werkstücks,
- Fig. 5: einen Querschnitt durch eine weitere Ausgestaltung des erfindungsgemäßen polymeren Werkstücks,
- Fig. 6: einen Querschnitt durch eine weitere Ausgestaltung des erfindungsgemäßen polymeren Werkstücks,
- Fig. 7: einen Querschnitt durch ein erfindungsgemäßes polymeres Werkstück während der Flutbeschichtung und
- Fig.8: ein detailliertes Flussdiagramm des erfindungsgemäßen Verfahrens zur Herstellung eines beschichteten polymeren Werkstücks.

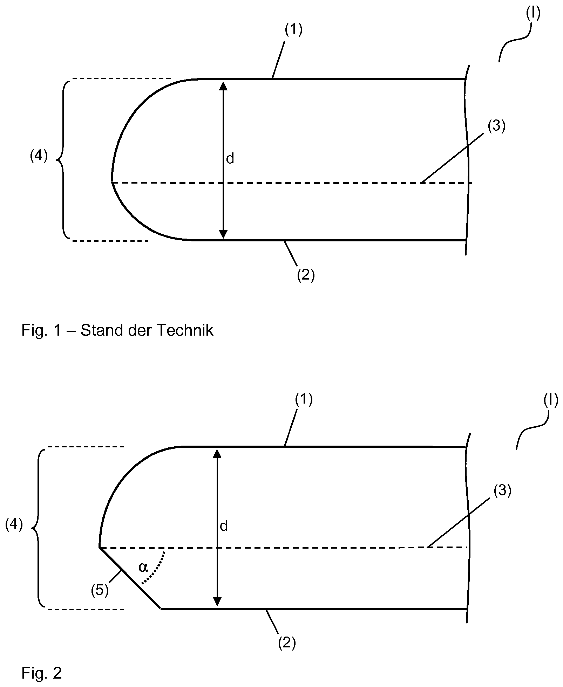

Fig. 1 zeigt einen Querschnitt durch ein durch Spritzguss hergestelltes polymeres Werkstück (I) nach dem Stand der Technik im Bereich der Anflutkantenfläche 4. Das polymere Werkstück (I) ist eine Dachscheibe eines Kraftfahrzeugs. Das polymere Werkstück (I) weist eine Länge von 1 m und eine Breite von 1 m auf. Das polymere Werkstück (I) enthält Polycarbonat (PC). Das polymere Werkstück (I) weist eine obere Hauptfläche 1, eine untere Hauptfläche 2, eine Spritzgusswerkzeug-Trennfläche 3 und eine Anflutkantenfläche 4 auf. Die obere Hauptfläche 1 und die untere Hauptfläche 2 sind plan und parallel zueinander ausgeführt. Die Dicke d des polymeren Werkstücks (I) angrenzend an die Anflutkantenfläche 4 beträgt 5 mm.

Die Spritzgusswerkzeug-Trennfläche 3 ist die Fläche, die beim Spritzguss des polymeren Werkstücks von der Grenzlinie zwischen den beiden Spritzgusswerkzeugen aufgespannt wird. Die Spritzgusswerkzeug-Trennfläche 3 ist parallel zu den Hauptflächen 1, 2 angeordnet. Der Abstand der Spritzgusswerkzeug-Trennfläche 3 von der oberen Hauptfläche 1 beträgt 3,2 mm und damit 64 % der Dicke d des polymeren Werkstücks (I).

Die obere Hauptfläche 1 ist als äußere Fläche der Dachscheibe vorgesehen. Sie ist daher besonderen mechanischen und chemischen Beanspruchungen sowie UV-Strahlung ausgesetzt. Die obere Hauptfläche 1 muss daher mit einer Schutzbeschichtung versehen werden.

Die Anflutkantenfläche 4 ist dafür vorgesehen, während der Flutbeschichtung des polymeren Werkstücks (I) nach oben zu weisen. Das polymere Werkstück (I) wird dabei in einem Winkel von 25° bis 85° zur Horizontalen 9 angeordnet, wobei die untere Hauptfläche 2 dem Boden zugewandt wird. Das polymere Werkstück (I) wird von der Anflutkantenfläche 4 an mit der Beschichtungslösung 8 überflutet. Durch Verdampfen des Lösungsmittels der Beschichtungslösung 8 wird die obere Hauptfläche 1 mit einer Beschichtung versehen.

Die Anflutkantenfläche 4 ist abgerundet ausgeformt. Der Querschnitt der Anflutkantenfläche 4 bildet eine konvexe Kurve mit nicht konstantem Krümmungsradius. Sowohl der Bereich der Anflutkantenfläche 4 zwischen oberer Hauptfläche 1 und Spritzgusswerkzeug-Trennfläche 3 als auch der Bereich der Anflutkantenfläche 4 zwischen Spritzgusswerkzeug-Trennfläche 3 und unterer Hauptfläche 2 weichen deutlich von einer planen Fläche ab.

Bei der Flutbeschichtung von polymeren Werkstücken (l) nach dem Stand der Technik werden häufig Verlaufsstörungen der Beschichtung im an die Anflutkantenfläche grenzenden Bereich der oberen Hauptfläche 1 beobachtet, die sich insbesondere als Lackläufer zeigen.

Fig. 2 zeigt einen Querschnitt durch eine Ausgestaltung des erfindungsgemäßen polymeren Werkstücks (l) im Bereich der Anflutkantenfläche 4. Der Bereich der Anflutkantenfläche 4 zwischen oberer Hauptfläche 1 und Spritzgusswerkzeug-Trennfläche 3 ist konvex gekrümmt gemäß dem Stand der Technik ausgeformt. Der Bereich 5 der Anflutkantenfläche 4 zwischen der Spritzgusswerkzeug-Trennfläche 3 und der unteren Hauptfläche 2 ist als plane Fläche ausgeformt. Der Winkel α zwischen dem Bereich 5 der Anflutkantenfläche 4 und der Spritzgusswerkzeug-Trennfläche 3 beträgt 45°. Der Bereich 5 der Anflutkantenfläche 4 kann im Vergleich zur Ausführung nach dem Stand der Technik in Figur 1 als Abfasung aufgefasst werden.

Durch den Bereich 5 der Anflutkantenfläche 4 wird bei der Flutbeschichtung die Beschichtungslösung 8 verstärkt über die Anflutkantenfläche 4 in Richtung der unteren Hauptfläche 2 geleitet. Die Beschichtungslösung 8 kann so nicht vermehrt auf die obere Hauptfläche 1 fließen. Verlaufstörungen der Beschichtung, beispielsweise Lackläufer können dadurch überraschend vermindert oder sogar ganz vermieden werden.

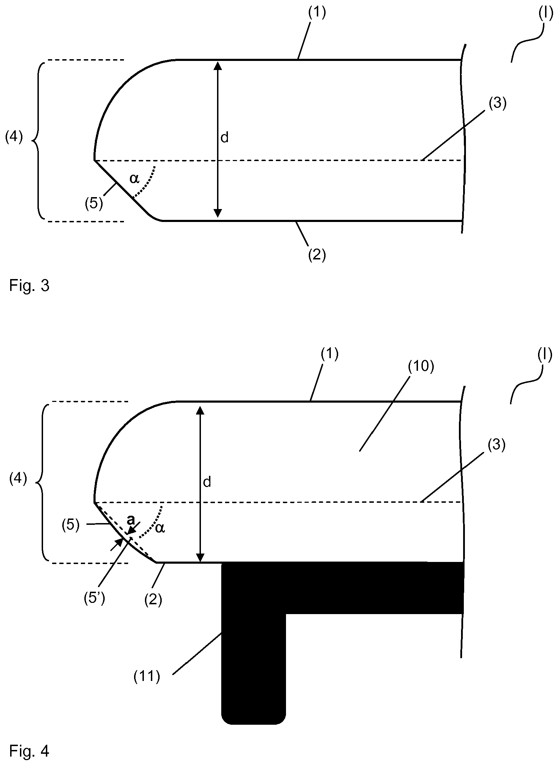

Fig. 3 zeigt einen Querschnitt durch eine weitere Ausgestaltung des erfindungsgemäßen polymeren Werkstücks (l) im Bereich der Anflutkantenfläche 4. Der Bereich 5 der Anflutkantenfläche 4 zwischen der Spritzgusswerkzeug-Trennfläche 3 und der unteren Hauptfläche 2 ist als plane Fläche ausgeformt. Im Übergangsbereich zur unteren Hauptfläche 2 weist die Anflutkantenfläche 4 herstellungsbedingt eine Krümmung auf. Das erfindungsgemäße Merkmal der Anflutkantenfläche 4, in diesem Fall die Ausgestaltung des Bereichs 5 als plane Fläche, gilt auch in Anwesenheit der herstellungsbedingten Krümmung im Übergangsbereich zwischen Anflutkantenfläche 4 und unterer Hauptfläche 2 als erfüllt.

Fig. 4 zeigt einen Querschnitt durch eine weitere Ausgestaltung des erfindungsgemäßen polymeren Werkstücks (l) im Bereich der Anflutkantenfläche 4. Der Bereich 5 der Anflutkantenfläche 4 ist leicht konvex gekrümmt ausgeführt. An den Bereich 5 kann eine plane Fläche 5' angepasst werden, die mit der Spritzgusswerkzeug-Trennfläche einen Winkel α von 45° einschließt. Jeder Punkt auf der Anflutkantenfläche 4 weist einen lotrechten Abstand a zur Fläche 5' von kleiner oder gleich 0,18 mm auf. Der maximale Betrag a wird in der Mitte des Bereichs 5 der Anflutkantenfläche 4 gemessen und beträgt 0,18 mm.

Das polymere Werkstück (I) ist durch Mehrkomponenten-Spritzguss hergestellt. Das polymere Werkstück (I) umfasst eine transparente Komponente 10 mit einer Dicke von 5 mm. Die transparente Komponente 10 enthält Polycarbonat (PC). Eine Oberfläche der transparenten Komponente 10 bildet die obere Hauptfläche 1 des polymeren Werkstücks (I). Der oberen Hauptfläche 1 gegenüberliegend ist auf einem Bereich der transparenten Komponente 10 eine opake Komponente 11 aufgebracht. Das durch die opake Komponente 11 gebildete Formelement verbessert die mechanischen Eigenschaften des polymeren Werkstücks (I) und dient als Designelement sowie der Fixierung des polymeren Werkstücks (I) am Verwendungsort als Dachscheibe. Die opake Komponente 11 enthält ein mineralgefülltes Polycarbonat (PC)-Polyethylenterephthalat (PET)-Gemisch. Das Ausgangsmaterial zum Spritzgießen der opaken Komponente 11 wurde von der Firma Bayer MaterialScience AG bereitgestellt (Makroblend DP7665 MBS162 - Farbcode 751092).

Die untere Hauptfläche 2 des polymeren Werkstücks (I) weist einen glatten, parallel zur oberen Hauptfläche 1 ausgeführten Bereich auf, der an die Anflutkantenfläche angrenzt und durch eine Oberfläche der transparenten Komponente 10 gebildet wird. Die erfindungsgemäße Dicke d des polymeren Werkstücks (I) angrenzend an die Anflutkantenfläche 4 ist der Abstand zwischen der glatten oberen Hauptfläche 1 und dem glatten Bereich der unteren Hauptfläche 2 angrenzend an die Anflutkantenfläche 4. Die Dicke d beträgt 5 mm.

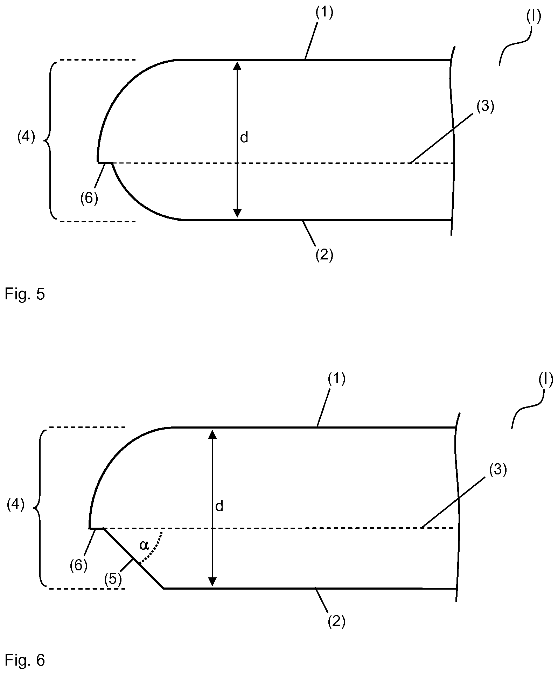

Fig. 5 zeigt einen Querschnitt durch eine weitere Ausgestaltung des erfindungsgemäßen polymeren Werkstücks (I) im Bereich der Anflutkantenfläche 4. Der Bereich der Anflutkantenfläche 4 zwischen oberer Hauptfläche 1 und Spritzgusswerkzeug-Trennfläche 3 ist konvex gerundet ausgeformt. Der Bereich 5 der Anflutkantenfläche 4 zwischen der Spritzgusswerkzeug-Trennfläche 3 und der unteren Hauptfläche 2 ist ebenfalls konvex gerundet ausgeformt. Ein der unteren Hauptfläche 2 zugewandter Bereich 6 der Anflutkantenfläche 4 mit einer Länge von 0,03 mm verläuft entlang der Spritzgusswerkzeug-Trennfläche 3. Durch diesen Versatz innerhalb der Anflutkantenfläche 4 wird die Beschichtungslösung 8 während der Flutbeschichtung des polymeren Werkstücks (I) verstärkt über die Anflutkantenfläche 4 in Richtung der unteren Hauptfläche 2 geleitet. Die Beschichtungslösung 8 kann so nicht vermehrt auf die obere Hauptfläche 1 fließen. Verlaufstörungen der Beschichtung können dadurch überraschend vermindert oder sogar ganz vermieden werden.

Fig. 6 zeigt einen Querschnitt durch eine weitere Ausgestaltung des erfindungsgemäßen polymeren Werkstücks (I) im Bereich der Anflutkantenfläche 4. Der der unteren Hauptfläche zugewandte Bereich 6 der Anflutkantenfläche 4 mit einer Länge von 0,04 mm verläuft entlang der Spritzgusswerkzeug-Trennfläche 3. Der Bereich 5 der Anflutkantenfläche 4 zwischen der Spritzgusswerkzeug-Trennfläche 3 und der unteren Hauptfläche 2 ist als plane Fläche mit einem Winkel α zur Spritzgusswerkzeug-Trennfläche 3 von 50° ausgeformt. Durch die Kombination des Bereichs 6 entlang der Spritzgusswerkzeug-Trennfläche 3 und des als plane Fläche gestalteten Bereichs 5 werden besonders gute Ergebnisse bei der Flutbeschichtung des polymeren Werkstücks (I) erreicht. Verlaufstörungen der Beschichtung können deutlich verringert werden.

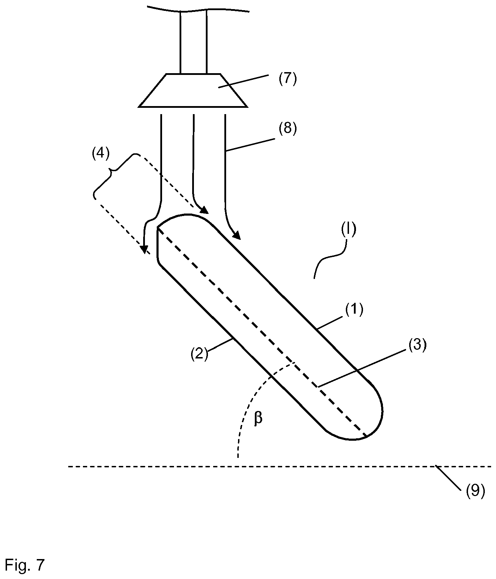

Fig. 7 zeigt einen Querschnitt durch ein erfindungsgemäßes polymeres Werkstück (I) während der Flutbeschichtung. Das polymere Werkstück (I) ist in einem Winkel β von 50° zur Horizontalen 9 angeordnet und mit einer nicht dargestellten Halterung fixiert. Die Anflutkante 4 ist gemäß der Figur 2 ausgestaltet. Die erfindungsgemäß gestaltete Anflutkantenfläche 4 weist dabei nach oben. Die untere Hauptfläche 2 ist dem Boden zugewandt. Mittels einer Düse 7 wird das polymere Werkstück (I) von der Anflutkante 4 an mit einer Beschichtungslösung beflutet. Die Düse 7 kann durch einen Roboterarm entlang der Anflutkantenfläche 4 bewegt werden. Die Beschichtungslösung enthält 20 Gew.-% Polysiloxane und als Lösungsmittel Methanol, n-Butanol und Isopropanol. Durch Verdampfen des Lösungsmittels wird die obere Hauptfläche 1 mit einer Beschichtung, die Polysiloxane enthält, versehen. Die Beschichtung dient als Schutzbeschichtung gegen mechanische und chemische Beschädigung sowie gegen UV-Strahlung.

Durch die erfindungsgemäße Gestaltung der Anflutkantenfläche 4 werden im Vergleich zum Stand der Technik deutlich verbesserte Beschichtungsergebnisse erzielt. Die Beschichtungslösung 8 wird verstärkt über die Anflutkantenfläche 4 in Richtung der unteren Hauptfläche 2 geleitet. Die Beschichtungslösung 8 kann so nicht vermehrt auf die obere Hauptfläche 1 fließen. Verlaufstörungen der Beschichtung können dadurch überraschend vermindert oder sogar ganz vermieden werden.

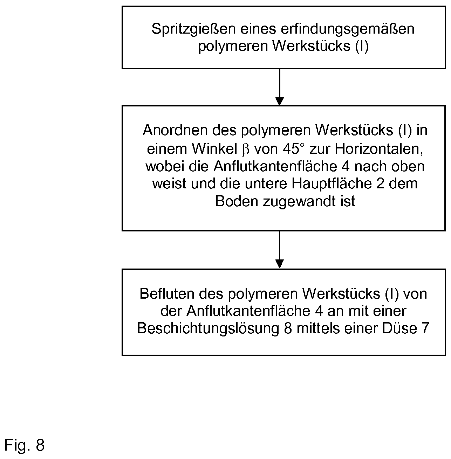

Fig. 8 zeigt ein Flussdiagramm eines Ausführungsbeispiels des erfindungsgemäßen Verfahrens zur Herstellung eines beschichteten polymeren Werkstücks (I).

Es wurden erfindungsgemäße polymere Werkstücke (I) hergestellt und erfindungsgemäß mittels Flutbeschichtung mit einer Beschichtung auf der oberen Hauptfläche 1 versehen. Die obere Hauptfläche 1 wurde im Anschluss auf Verlaufstörungen der Beschichtung, insbesondere auf Lackläufer untersucht. Im Vergleich zu polymeren Werkstücken (I) mit herkömmlich ausgestalteter Anflutkante 4 wurden bei einer deutlich geringeren Anzahl an Testproben solche Lackläufer im an die Anflutkantenfläche 4 angrenzenden Bereich der oberen Hauptfläche 1 beobachtet.

Es war für den Fachmann unerwartet und überraschend, dass durch eine Veränderung der Ausgestaltung der Anflutkantenfläche 4 deutlich verbesserte Beschichtungsergebnisse erzielt werden können.

### Bezugszeichenliste

- (I): polymeres Werkstück

- (1): obere Hauptfläche
- (2): untere Hauptfläche
- (3): Spritzgusswerkzeug-Trennfläche
- (4): Anflutkantenfläche
- (5): Bereich von (4) zwischen (3) und (2)
- (5'): an (5) angepasste plane Fläche
- (6): Bereich von (4) entlang (3)
- (7): Düse
- (8): Beschichtungslösung
- (9): Horizontale
- (10): transparente Komponente von (I)
- (11): opake Komponente von (I)

- α: Winkel zwischen (3) und (5)/(5')
- β: Winkel zwischen (I) und (9)

- a: lotrechter Abstand zwischen (5) und (5')
- d: Dicke von (I) angrenzend an die Anflutkantenfläche

## Patentansprüche

1. Ein polymeres Werkstück (I), das eine polymere Scheibe oder Kunststoffabdeckung für Fortbewegungsmittel ist, zumindest umfassend eine obere Hauptfläche (1), eine untere Hauptfläche (2), eine Spritzgusswerkzeug-Trennfläche (3) und eine Anflutkantenfläche (4), wobei die Anflutkantenfläche (4) im Bereich (5) zwischen der Spritzgusswerkzeug-Trennfläche (3) und der unteren Hauptfläche (2) als plane Fläche (5') mit einem Winkel α zur Spritzgusswerkzeug-Trennfläche (3) von 20° bis 70° ausgeformt ist und dabei um einen Betrag a von 0,0 mm bis 0,5 mm von der idealen planen Fläche (5') abweichen darf.

2. Werkstück (I) nach Anspruch 1, wobei der Winkel α von 30° bis 60°, bevorzugt von 35° bis 55° beträgt.

3. Werkstück (I) nach Anspruch 1 oder 2, wobei der Betrag a von 0,0 mm bis 0,3 mm, bevorzugt von 0,0 mm bis 0,2 mm beträgt.

4. Werkstück (I) nach einem der Ansprüche 1 bis 3, wobei der Bereich (5) der Anflutkantenfläche (4) konvex gekrümmt ist und der maximale Betrag a bevorzugt in der Mitte des Bereichs (5) angeordnet ist.

5. Ein polymeres Werkstück (I), das eine polymere Scheibe oder Kunststoffabdeckung für Fortbewegungsmittel ist, zumindest umfassend eine obere Hauptfläche (1), eine untere Hauptfläche (2), eine Spritzgusswerkzeug-Trennfläche (3) und eine Anflutkantenfläche (4), wobei ein der unteren Hauptfläche (2) zugewandter Bereich (6) der Anflutkantenfläche (4) mit einer Länge von 0,005 mm bis 0,1 mm entlang der Spritzgusswerkzeug-Trennfläche (3) verläuft.

6. Werkstück (I) nach Anspruch 5, wobei der Bereich (6) der Anflutkantenfläche (4) eine Länge von 0,01 mm bis 0,05 mm aufweist.

7. Werkstück (I) nach Anspruch 5 oder 6, wobei die Anflutkantenfläche (4) im Bereich (5) zwischen der Spritzgusswerkzeug-Trennfläche (3) und der unteren Hauptfläche (2) als plane Fläche (5') mit einem Winkel α zur Spritzgusswerkzeug-Trennfläche (3) von 20° bis 70°, bevorzugt 30° bis 60°, besonders bevorzugt von 35° bis 55° ausgeformt ist und / oder um einen Betrag a von 0,0 mm bis 0,5 mm, bevorzugt von 0,0 mm bis 0,3 mm, besonders bevorzugt von 0,0 mm bis 0,2 mm von der planen Fläche (5') abweicht.

8. Werkstück (I) nach einem der Ansprüche 1 bis 7, wobei die Spritzgusswerkzeug-Trennfläche (3) in einem Abstand zur oberen Hauptfläche (1) von 20 % bis 80 %, bevorzugt von 33 % bis 67 % der Dicke d des polymeren Werkstücks (I) angrenzend an die Anflutkantenfläche (4) angeordnet ist.

9. Werkstück (I) nach einem der Ansprüche 1 bis 8, das zumindest Polycarbonate (PC), Polyethylenterephthalat (PET) und / oder Polymethylmethacrylat (PMMA) enthält.

10. Werkstück (I) nach einem der Ansprüche 1 bis 9, das eine Dicke d angrenzend an die Anflutkantenfläche (4) von 1 mm bis 10 mm, bevorzugt von 2 mm bis 7 mm aufweist.

11. Verfahren zur Herstellung eines beschichteten polymeren Werkstücks, wobei zumindest
a) ein polymeres Werkstück (I) nach einem der Ansprüche 1 bis 10 bereitgestellt wird,
b) das polymere Werkstück (I) mit nach oben weisender Anflutkantenfläche (4) in einem Winkel β zur Horizontalen (9) von 25° bis 85° angeordnet wird, wobei die untere Hauptfläche 2 dem Boden zugewandt wird, und
c) das polymere Werkstück (I) von der Anflutkantenfläche (4) an mit einer Beschichtungslösung (8) beflutet wird.

12. Verfahren nach Anspruch 11, wobei das Werkstück durch Ein- oder Mehrkomponenten-Spritzguss oder durch Ein- oder Mehrkomponenten-Spritzprägen bereitgestellt wird.

13. Verfahren nach Anspruch 11 oder 12, wobei die Gestaltung der Anflutkantenfläche (4) durch versetztes Gegeneinanderführen der beiden Spritzgusswerkzeuge, durch eine unterschiedliche Temperierung der beiden Spritzgusswerkzeuge oder durch dem Spritzguss nachgelagerte Bearbeitungsschritte wie Fräsen, Schleifen, Feilen oder Schneiden erfolgt.

14. Verfahren nach einem der Ansprüche 11 bis 13, wobei der Winkel β von 35° bis 70°, bevorzugt von 40° bis 60° beträgt.

15. Verfahren nach einem der Ansprüche 11 bis 14, wobei die Beschichtungslösung (8) zumindest ein Polysiloxan, ein Polyacrylat, ein Polymethacrylat und / oder ein Polyurethan sowie ein Lösungmittel enthält und wobei das Lösungsmittel bevorzugt zumindest Wasser, Alkohol, Phenole und / oder Ketone, besonders bevorzugt Ethanol, Methanol, 2-Propanol, n-Butanol, 1-Methoxy-2-Propanol, 4-Hydroxy-4-methyl-2-pentanon, 4-Methyl-2-pentanon und / oder Gemische oder Derivate davon enthält.

16. Verfahren nach einem der Ansprüche 11 bis 15, wobei durch Wiederholen von Verfahrensschritt (c) mindestens zwei gleiche oder unterschiedliche Beschichtungen aufgebracht werden.

17. Verwendung eines polymeren Werkstücks (I) nach einem der Ansprüche 1 bis 10 als Scheibe, als Bestandteil einer Scheibe oder als Kunststoffabdeckung von Fortbewegungsmitteln für den Verkehr auf dem Lande, in der Luft oder zu Wasser verwendet, insbesondere als Heck-, Windschutz-, Seiten-, Dachscheibe, Leuchtenabdeckung, Zierleiste und / oder als Fahrzeugdach von Personenkraftwagen, Lastkraftwagen, Bussen, Straßenbahnen, U-Bahnen, Zügen und Motorrädern.

## Claims

1. A polymer workpiece (I), which is a polymer pane or plastic covering for means of transportation, comprising at least an upper main surface (1), a lower main surface (2), an injection-mould separating surface (3), and a flow attack edge surface (4), wherein the flow attack edge surface (4) is formed in the region (5) between the injection-mould separating surface (3) and the lower main surface (2) as a planar surface (5') with an angle α relative to the injection-mould separating surface (3) from 20° to 70° and is allowed to deviate by an amount a from 0.0 mm to 0.5 mm from the ideal planar surface (5').

2. Workpiece (I) according to claim 1, wherein the angle α is from 30° to 60°, preferably from 35° to 55°.

3. Workpiece (I) according to claim 1 or 2, wherein the amount a is from 0.0 mm to 0.3 mm, preferably from 0.0 mm to 0.2 mm.

4. Workpiece (I) according to one of claims 1 through 3, wherein the region (5) of the flow attack edge surface (4) is convexly curved and the maximum amount a is preferably arranged in the centre of the region (5).

5. A polymer workpiece (I), which is a polymer pane or plastic covering for means of transportation, comprising at least an upper main surface (1), a lower main surface (2), an injection-mould separating surface (3), and a flow attack edge surface (4), wherein a region (6) of the flow attack edge surface (4) facing the lower main surface (2) runs with a length from 0.005 mm to 0.1 mm along the injection-mould separating surface (3).

6. Workpiece (1) according to claim 5, wherein the region (6) of the flow attack edge surface (4) has a length from 0.01 mm to 0.05 mm.

7. Workpiece (I) according to claim 5 or 6, wherein the flow attack edge surface (4) is formed in the region (5) between the injection-mould separating surface (3) and the lower main surface (2) as a planar surface (5') with an angle α relative to the injection-mould separating surface (3) from 20° to 70°, preferably 30° to 60°, particularly preferably from 35° to 55° and / or deviates by an amount a from 0.0 mm to 0.5 mm, preferably from 0.0 mm to 0.3 mm, particularly preferably from 0.0 mm to 0.2 mm from the planar surface (5').

8. Workpiece (I) according to one of claims 1 through 7, wherein the injection-mould separating surface (3) is arranged at a distance from the upper main surface (1) of 20% to 80%, preferably of 33% to 67% of the thickness d of the polymer workpiece (I) adjacent the flow attack edge surface (4).

9. Workpiece (I) according to one of claims 1 through 8, that contains at least polycarbonates (PC), polyethylene terephthalate (PET), and / or polymethyl methacrylate (PMMA).

10. Workpiece (I) according to one of claims 1 through 9, that has a thickness d adjacent the flow attack edge surface (4) from 1 mm to 10 mm, preferably from 2 mm to 7 mm.

11. Method for producing a coated polymer workpiece, wherein at least
a) a polymer workpiece (I) according to one of claims 1 through 10 is provided,
b) the polymer workpiece (I) with the flow attack edge surface (4) pointing upward is arranged at an angle β relative to the horizontal (9) from 25° to 85°, wherein the lower main surface 2 is facing the ground, and
c) the polymer workpiece (I) is flooded from the flow attack edge surface (4) onward with a coating solution (8).

12. Method according to claim 11, wherein the workpiece is provided by single- or multi-component injection moulding or by single- or multi-component injection-compression moulding.

13. Method according to claim 11 or 12, wherein the configuring of the flow attack edge surface (4) is done by offset guiding of the two injection moulds against each other, by different tempering of the two injection moulds, or by processing steps downstream from the injection moulding such as milling, grinding, filing, or cutting.

14. Method according to one of claims 11 through 13, wherein the angle β is from 35° to 70°, preferably from 40° to 60°.

15. Method according to one of claims 11 through 14, wherein the coating solution (8) contains at least a polysiloxane, a polyacrylate, a poly methacrylate, and / or a polyurethane, as well as a solvent and wherein the solvent preferably contains at least water, alcohol, phenols, and / or ketones, particularly preferably ethanol, methanol, 2-propanol, n-butanol, 1-methoxy-2-propanol, 4-hydroxy-4-methyl-2-pentanone, 4-methyl-2-pentanone, and / or mixtures or derivatives thereof.

16. Method according to one of claims 11 through 15, wherein at least two identical or different coatings are applied by repetition of process step (c).

17. Use of a polymer workpiece (I) according to one of claims 1 through 10 as a pane, as a component of a pane, as a plastic covering of means of transportation for travel on land, in the air, or on water used, in particular as a rear window, windshield, side window, roof panel, luminaire cover, trim strip, and / or as a motor vehicle roof of passenger vehicles, trucks, buses, streetcars, subways, trains, and motorcycles.

## Revendications

1. - Pièce polymère (I), qui est une vitre polymère ou un couvercle de matière plastique pour des moyens de locomotion, au moins comportant une surface principale supérieure (1), une surface principale inférieure (2), une surface de séparation (3) de l'outil de moulage par injection et une surface latérale d'aspersion (4), la surface latérale d'aspersion (4) étant formée dans la zone (5) entre la surface de séparation de l'outil de moulage par injection (3) et la surface principale inférieure (2) en tant que surface plane (5') avec un angle α par rapport à la surface de séparation (3) de l'outil de moulage par injection de 20° à 70° et ainsi pouvant s'écarter d'une quantité a de 0,0 mm à 0,5 mm de la surface plane (5') idéale.

2. - Pièce (I) selon la revendication 1, dans laquelle l'angle α est de 30° à 60° , de préférence de 35° à 55°.

3. - Pièce (I) selon l'une des revendications 1 ou 2, dans laquelle la quantité a est de 0,0 mm à 0,3 mm, de préférence de 0,0 mm à 0,2 mm.

4. - Pièce (I) selon l'une des revendications 1 à 3, dans laquelle la zone (5) de la surface latérale d'aspersion (4) est cintrée de façon convexe et la quantité maximale a est disposée de préférence au milieu de la zone (5).

5. - Pièce polymère (I), qui est une vitre polymère ou un couvercle de matière plastique pour des moyens de locomotion, au moins comportant une surface principale supérieure (1), une surface principale inférieure (2), une surface de séparation (3) de l'outil de moulage par injection et une surface latérale d'aspersion (4), une zone (6) de la surface latérale d'aspersion (4) tournée vers la surface principale inférieure (2) s'étendant avec une longueur de 0,005 mm à 0,1 mm le long de la surface de séparation (3) de l'outil de moulage par injection.

6. - Pièce (I) selon la revendication 5, dans laquelle la zone (6) de la surface latérale d'aspersion (4) présente une longueur de 0,01 mm à 0,05 mm.

7. - Pièce (I) selon l'une des revendications 5 ou 6, dans laquelle la surface latérale d'aspersion (4) est formée dans la zone (5) entre la surface de séparation (3) de l'outil de moulage par injection et la surface principale inférieure (2) en tant que surface plane (5') avec un angle α par rapport à la surface de séparation (3) de l'outil de moulage par injection de 20° à 70°, de préférence de 30° à 60°, de manière particulièrement préférée de 35° à 55° et/ou s'écarte d'une quantité a de 0,0 mm à 0,5 mm, de préférence de 0,0 mm à 0,3 mm, de manière particulièrement préférée de 0,0 mm à 0,2 mm, de la surface plane (5').

8. - Pièce (I) selon l'une des revendications 1 à 7, dans laquelle la surface de séparation (3) de l'outil de moulage par injection est disposée à une distance de la surface principale supérieure (1) de 20 % à 80 %, de préférence de 30 % à 67 % de l'épaisseur d de la pièce polymère (I) de manière adjacente à la surface latérale d'aspersion (4).

9. - Pièce (I) selon l'une des revendications 1 à 8, qui contient au moins des polycarbonates (PC), du poly(téréphtalate d'éthylène) (PET) et/ou du poly(méthacrylate de méthyle) (PMMA).

10. - Pièce (I) selon l'une des revendications 1 à 9, qui présente une épaisseur d de manière adjacente à la surface latérale d'aspersion (4) de 1 mm à 10 mm, de préférence de 2 mm à 7 mm.

11. - Procédé de fabrication d'une pièce polymère revêtue, suivant lequel au moins
(a) une pièce polymère (I) selon l'une des revendications 1 à 10 est préparée ;
(b) la pièce polymère (I) est disposée avec la surface latérale d'aspersion (4) dirigée vers le haut à un angle β par rapport à l'horizontale (9) de 25° à 85°, la surface principale inférieure (2) étant tournée vers le sol ; et
(c) la pièce polymère (I) est aspergée à partir de la surface latérale d'aspersion (4) par une solution de revêtement (8).

12. - Procédé selon la revendication 11, dans lequel la pièce est préparée par moulage par injection à un composant ou à plusieurs composants ou par moulage par injection-compression à un composant ou à plusieurs composants.

13. - Procédé selon l'une des revendications 11 ou 12, dans lequel la conception de la surface latérale d'aspersion (4) se fait par guidage décalé des deux outils de moulage par injection l'un contre l'autre, par un contrôle de température différent des deux outils de moulage par injection ou par les étapes de traitement en aval du moulage par injection comme le fraisage, le meulage, le limage ou la découpe.

14. - Procédé selon l'une des revendications 11 à 13, dans lequel l'angle β est de 35° à 70°, de préférence de 40° à 60°.

15. - Procédé selon l'une des revendications 11 à 14, dans lequel la solution de revêtement (8) contient au moins un polysiloxane, un polyacrylate, un polyméthacrylate et/ou un polyuréthane ainsi qu'un solvant et dans lequel le solvant contient de préférence au moins de l'eau, de l'alcool, des phénols et/ou des cétones, de manière particulièrement préférée de l'éthanol, du méthanol, du 2-propanol, du n-butanol, du 1-méthoxy-2-propanol, de la 4-hydroxy-4-méthyl-2-pentanone, de la 4-méthyl-2-pentanone et/ou des mélanges ou des dérivés de ceux-ci.

16. - Procédé selon l'une des revendications 11 à 15, dans lequel au moins deux revêtements identiques ou différents sont appliqués par répétition de l'étape de procédé (c).

17. - Utilisation d'une pièce polymère (I) selon l'une des revendications 1 à 10 en tant que vitre, en tant que constituant d'une vitre ou en tant que couvercle de matière plastique de moyens de locomotion pour le transport sur terre, dans l'air ou dans l'eau, en particulier en tant que lunette arrière, pare-brise, vitre latérale, panneau de toit, couvercle de lampe, élément enjoliveur et/ou en tant que toit de véhicule pour voitures particulières, camions, bus, tramways, métros, trains et motocycles.
